Europäisches Patentamt

European Patent Office

Office européen des brevets

(11) Veröffentlichungsnummer: **0 120 129**
**B1**

# EUROPÄISCHE PATENTSCHRIFT

(45) Veröffentlichungstag der Patentschrift:
15.10.86

(21) Anmeldenummer: 83112444.1

(22) Anmeldetag: 10.12.83

(51) Int. Cl.⁴: **C 09 J 3/16** //
**C08G69/36**

(54) **Verwendung von Copolyamiden zum Heisssiegeln von Textilien.**

(30) Priorität: 31.12.82 DE 3248776

(43) Veröffentlichungstag der Anmeldung:
03.10.84 Patentblatt 84/40

(45) Bekanntmachung des Hinweises auf die Patenterteilung:
15.10.86 Patentblatt 86/42

(84) Benannte Vertragsstaaten:
CH DE FR GB IT LI NL

(56) Entgegenhaltungen:
CH-B-546 291
FR-A-2 195 647

CHEMICAL ABSTRACTS, Band 82, Nr. 16, 21. April
1975, Seite 55, Nr. 99111q, Columbus, Ohio, USA;

Die Akte enthält technische Angaben, die nach
dem Eingang der Anmeldung eingereicht wurden
und die nicht in dieser Patentschrift enthalten sind.

(73) Patentinhaber: HÜLS AKTIENGESELLSCHAFT,
Patentabteilung / PB 15 - Postfach 13 20, D-4370
Marl 1 (DE)

(72) Erfinder: Panoch, Hans Joachim, Dr., Rehwinkel
14, D-4358 Haltern 7 (DE)
Erfinder: Feldmann, Rainer, Dr., Leverkusener
Strasse 27, D-4370 Marl (DE)
Erfinder: Hinn, Hans, Leverkusener Strasse 10,
D-4370 Marl (DE)
Erfinder: Brandt, Siegfried, Dr., An der
Mühlenstege 35, D-4358 Haltern (DE)
Erfinder: Haage, Hans-Jürgen, Gaussstrasse 13,
D-4690 Herne 2 (DE)

## Beschreibung

Die Verwendung von Copolyamiden als Schmelzkleber ist beit langem bekannt (US-PS 2 252 555). Als Schmelzkleber haben insbesondere solche auf der Basis von Laurinlactam in den letzten Jahren Eingang in die Technik des Heißsiegelns von Tertilien gefunden (DE-AS 12 53 449). Da diese Schmelzkleber noch nicht voll befriedigen können, insbesondere hinsichtlich ihrer Heißwasserbeständigkeit, wurden diese vielfach abgewandelt.

So beschreibt die DE-AS 19 39 758 bzw. die CH-A-546 291 Schmelzkleber auf der Basis von Copolyamiden, welche verzweigtkettige Diaminbausteine enthalten, die eine verbesserte Waschlaugenbeständigkeit aufweisen. Auch in der DE-OS 30 05 939 werden Copolyamide beschrieben, die einfach verzweigte $C_{10}$-Diamine, wie das 5-Methylnonamethylendiamin, enthalten. Diese Copolyamide werden ebenfalls als Textilschmelzkleber empfohlen. Sie besitzen eine recht gute Heißwasserbeständigkeit, müssen jedoch bei höheren Temperaturen fixiert werden. Copolyamide auf der Basis von Nonamethylendiamin haben ebenfalls einen zu hohen Schmelzpunkt und sind daher nicht als Schmelzkleber zum Heißsiegeln von Tetilien geeignet (DE-OSS 25 08 112, 26 42 244). Niedrigschmelzende Copolyamide befriedigen nicht hinsichtlich ihrer Heißwasserbeständigkeit und ihrer Reinigungsbeständigkeit (DE-OSS 23 24 159, 23 24 160, 24 36 430, 28 06 933).

Textilien werden in den meisten Fällen ausgerüstet, d. h. mit Beschichtungsmitteln versehen, die dem Gewebe z. B. einen besseren Griff geben oder die sie wasserabstoßend machen. Letzteres geschieht z. B. durch Siliconisieren. Bei derartig ausgerüsteten Geweben sind die bekanntgewordenen Schmelzkleber nicht ausreichend wirksam.

Mit anderen Worten ausgedrückt, die Haftfestigkeit des Klebers ist zu gering.

Einen wesentlich verbesserten Schmelzkleber, der zum Verkleben von siliconisierten Geweben geeignet ist, wird in der DE-AS 29 20 416 beschrieben. Dieser pulverförmig einsetzbare Schmelzkleber zum Heißsiegeln von Textilien besteht aus einem Gemisch von bestimmten Anteilen ausgewählter Copolyamide mit höherem und niedrigerem Schmelzpunkt.

Abgesehen davon, daß dieser Schmelzkleber nur in Pulverform eingesetzt besonders wirksam ist, erfordert es auch einen erheblichen technischen Aufwand, die Gemisch nach den jeweiligen Rezepturen herzustellen. Schließlich bedürfen diese Schmelzkleber des Standes der Technik auch noch einer Verbesserung.

Aufgabe der Erfindung ist es daher, einen Schmelzkleber auf Basis von Copolyamiden bereitzustellen, der ohne Zusatz eines weiteren Copolyamids sowohl auf normalem als auch siliconisiertem Gewebe angewendet werden kann. Ein Schmelzkleber, der jedoch insbesondere bei siliconisierten Geweben eine gute Haftung bewirkt, die auch nach mehrmaliger Wäsche und/oder chemischer Reinigung in ausreichendem Maße erhalten bleibt, d. h. daß nach der Wäsche bzw. der chemischen Reinigung die Haftwirkung nicht so stark abfällt, wie bei Schmelzklebern des Standes der Technik.

Es wurde nun gefunden, daß die geschilderten Nachteile des Standes der Technik überwunden werden, wenn zum Heißsiegeln von Textilien Copolyamide auf der Basis von Dicarbonsäuren, Diaminen und $\mu$-Aminocarbonsäuren bzw. Lactamen verwendet werden, aus

A 20 bis 80 Gewichtsprozent
einer oder mehrerer apliphatischer $\omega$-Aminocarbonsäuren bzw. Lactamen mit 6 bis 12 Kohlenstoffatomen in der Kette und

B 80 bis 20 Gewichtsprozent
äquimolaren Gemischen einer oder mehrerer aliphatischer Dicarbonsäuren mit 6 bis 12 Kohlenstoffatomen und aliphatischen $\alpha, \omega$-Diaminen und gegebenenfalls cycloaliphatischen Diaminen mit 6 bis 12 Kohlenstoffatomen, wobei mindestens 30 Gewichtsprozent dieser Diamine ausschließlich einfach verzweigte aliphatische Diamine mit 6 Kohlenstoffatomen darstellen und andere einfach verzweigte aliphatische Diamine mit 3 bis 15 Kohlenstoffatomen ausgeschlossen sind.

Vorteilhaft beträgt der Anteil der Komponente A 30 bis 75 Gewichtsprozent, insbesondere 40 bis 75 Gewichtsprozent, und der Komponente B 70 bis 25, insbesondere 60 bis 25 Gewichtsprozent.

Vorteilhaft besteht die Komponente A aus mindestens zwei verschiedenen $\omega$-Aminocarbonsäuren bzw. Lactamen. Dabei sollten 30 bis 70 Prozent der Lactame oder $\omega$-Aminocarbonsäuren 6 bis 8 C-Atome und 70 bis 30 Prozent 9 bis 12 C-Atome haben.

Die Grundbausteine der Komponente A enthalten demnach die Gruppierung -NH-$(CH_2)_n$-CO-, wobei n den Wert 5 bis 11 annehmen kann; geeignete Monomere sind demnach Caprolactam (n = 5), Önanthlactam, Capryllactam, Suberolactam, Aminoundecansäure, Laurinlactam oder die jeweiligen $\omega$-Aminocarbonsäuren der genannten Lactame.

Aliphatische Dicarbonsäuren der Komponente B sind solche der Formel -CO-$(CH_2)_x$-CO-, wobei x den Wert 4 bis 11 annehmen kann, beispielsweise Adipinsäure, Azelainsäure, Sebazinsäure, Korksäure, Nonandicarbonsäure, Decandicarbonsäure.

Geeignete aliphatische $\alpha, \omega$-Diamine sind z. B. Hexamethylendiamin, Dodecamethylendiamin, Decamethylendiamin, Nonamethylendiamin, 2, 4, 4- und/oder 2, 2, 4-Trimethylhexamethylendiamin, als cycloaliphatische Diamine sein beispielsweise genannt Isophorondiamin.

Der Anteil der cycloaliphatischen Diamine am Gesamtdiaminanteil beträgt 0 bis 20 Gewichtsprozent, vorteilhaft werden diese nich verwendet. "Einfach verzweigte aliphatische Diamine gemäß der Erfindung sind ausschließlich solche mit 6 Kohlenstoffatomen, d. h. andere einfach verzweigte aliphatische Diamine mit 3 bis 15 Kohlenstoffatomen sind ausgeschlossen. Die einfach verzweigten aliphatischen Diamine Der Erfindung sind zu mindestens 30, insbesondere zu mindestens 50 Gewichtsprozent im Gesamtdiaminanteil enthalten." Geeignetes Diamin dieser Art ist insbesondere das 2-Methylpentamethylendiamin.

Vorteilhaft wird ein Isomerengemisch eingesetzt, das zu 80 bis 100 Gewichtsprozent aus 2-Methylpentamethylendiamin und zu 0 bis 20 Gewichtsprozent aus 2-Ethyl-tetramethylendiamin besteht.

Ein solches unter dem Namen Diamin 51 käufliches Gemisch wird beispielsweise durch Hydrieren der Nebenprodukte erhalten, die bei der Herstellung von Adiponitril aus Blausäure und Butadien anfallen.

Die Copolyamide sind nach dem an sich bekannten Verfahren der hydrolytischen Polykondensation bei Temperaturen zwischen 200 und 300°C und Wasserdampfdrucken von 10 bis 20 bar im Rührautoklaven herstellbar. Dabei können die üblichen H-aciden Katalysatoren und ggf. andere Zuschlagstoffe, wie bekannte Wärme- und Licht-Stabilisatoren, Fluoreszenzindikatoren und der gleichen, zugesetzt werden. Die Einstellung des Molekulargewichtes erfolgt in bekannter Weise durch gezielte Zugabe von monofunktionellen Aminen oder Carbonsäuren bzw. durch gezielte überschüssige Zugabe von Diaminen oder Dicarbonsäuren.

Die Copolyamidschmelzen werden wie üblich als Strang aus dem Autoklaven ausgefahren, mit Wasser abgekühlt, granuliert und getrocknet. Für die Anwendung als Textilkleber in Pulverform folgt die Feinmahlung unter Zuhilfenahme von flüssigem $N_2$ und eine Klassierung in die dem jeweiligen Anwendungsverfahren angepaßte Kornfraktion gegebenenfalls unter Zuhilfenahme von Siebhilfsmitteln.

Die Bestimmung der relativen Lösungsviskosität $\eta_{rel}$ wurde mit 0,5 %igen Lösungen der Copolyamide in destilliertem m-Kresol bei 25°C durchgeführt. Das Schmelzverhalten, d. h. der Fließpunkt des Copolyamidpulvers, wurde im Schmelzröhrchen mit dem Thermoanalysengerät FP 51 der Fa. Mettler bestimmt. Der Gehalt an extrahierbaren Anteilen im Copolyamid wird durch Extrahieren von 10 g Granulat in 150 ml Methylenchlorid bei Siedetemperaturen (300 ml Erlenmeier-Kolben, Rückfluß, Magnetrührer) und Auswägen des Extraktes ermittelt.

Für die Prüfung der anwendungstechnischen Eigenschaften wurde jeweils eine Kornfraktion 80 bis 200 μm benutzt. Das Pulver wurde mit Hilfe einer Saladin-Maschine auf einen unausgerüsteten, gerauhten, entschlichteten Baumwoll-Einlagestoff mit einem bestimmten Auftragsgewicht (AG), wie in der Tabelle angegeben, aufgebracht und auf einer Fläche von 5 x 20 cm mit entweder normalem körperbindigem Oberstoff (z. B. Mischgewebe 55 % Polyester / 45 % Wolle) oder mit silikonisiertem Gewebe (65 % Polyester/ 35 % Baumwolle) in einer Bügelpresse 15 sec mit einem Preßdruck von 350 pond/cm² verklebt.

Diese Verklebungen wurden dann im Zugversuch entweder unbehandelt oder nach mehrfacher Wäsche bei 60°C bzw. mehrfacher chemischer Reinigung auf ihre Trennfestigkeit untersucht. Die Ergebnisse sind in der Tabelle 1 zusammengefaßt.

Die Schmelzkleber auf Basis der Copolyamide gemäß der Erfindung können in Form von Pulver, Folie, Monofil, Vlies, Multifilament, Paste, Schmelztropfen oder Schmelzraupe zum Heißsiegeln von Textilien eingesetzt werden.

## Beispiel 1

Ein statistisches Copolyamid aus 40 Teilen Laurinlactam (LL), 30 Teilen Caprolactam (CL) und 30 Teilen eines äquimolaren Gemisches aus Dodecandisäure (DDS) und Diamin 51 (MPD = 2-Methylpentamethylendiamin, das ca. 8 % des isomeren 2-Ethyltetramethylendiamins enthält), das durch hydrolytische Polykondensation erhalten worden war, wurde mit Hilfe der Kaltmahlung in ein Textilklebepulver überführt.

Unter den in Tabelle 1 angegebenen Bedingungen wurde ein mit dem Copolyamid beschichteter Einlagestoff mit normalem (N) und silikonisiertem (S) Gewebe behandelt und unter den angegebenen Bedingungen geprüft.

## Vergleichsbeispiel 1

Es wurde wie in Beispiel 1 verfahren, wobei an Stelle 30 Teilen DDS/DA 51-Salz 30 Teile DH-Salz, d. h. ein äquimolares Gemisch aus DDS und Hexamethylendiamin (HMD) eingesetzt wurde.

Die Trennfestigkeit des Textilklebers nach der Erfindung ist gegenüber dem des Vergleichsbeispiels 1 deutlich höher. Nach Wäsche und Reinigung fallen die Werte auch bei silikonisiertem Gewebe im Rahmen der Fehlergrenzen nicht oder nur unwesentlich ab.

## Beispiel 2

Ein Copolyamid aus 25 Teilen LL, 25 Teilen CL, 25 Teilen DH-Salz und 25 Teilen des äquimolaren Gemisches aus Azelainsäure (AzS) und DA 51 wird verwendet. Ein bolches unter 100°C schmelzendes Copolyamid wird üblicherweise zum Verkleben von leichten Stoffen oder Leder eingesetzt.

Die Verarbeitung zu Textilklebepulver und deren Prüfung erfolgte wie in Beispiel 1 beschrieben; auf die für diese unter 100°C schmelzenden Kleber nicht relevante mehrmalige Wäsche wurde verzichtet. Die Trennfestigkeiten liegen für normales und silikonisiertes Gewebe auf vergleichsweise hohem Niveau und fallen in beiden Fällen nach dreimal bzw. fünfmal chemischer Reinigung nicht oder nur unwesentlich ab.

**Vergleichsbeispiel 2**

Zum Vergleich wurde wie in Beispiel 2 ein Copolyamid aus 30 Teilen LL, 30 Teilen CL und je 20 Teilen der äquimolaren Gemische aus Sebazinsäure (SS) und HMD bzw. AzS und HMD, also ohne Einsatz von DA 51, hergestellt und geprüft. Aus den Meßwerten in der Tabelle sind deutlich das niedrigere Niveau der Meßwere und der Abfall der Trennfestigkeiten nach der chemischen Reinigung gegenüber den vergleichbaren Werten des Beispiels 2 abzulesen.

**Vergleichsbeispiel 3**

Aus 25 Teilen LL, 25 Teilen CL, 25 Teilen DH-Salz und 25 Teilen des äquimolaren Gemisches aus AzS und 5-Methylnonamethylendiamin (MNDA) entsprechend Beispiel 1 der DE-OS 30 05 939 wurde wie in Beispiel 2 ein Copolyamid-Textlikeber hergestellt und geprüft. In dem angewendeten Fließpunkt-Bereich ist die beschriebene Beständigkeit der MNDA-haltigen Schmelzkleber nicht mehr gegeben, und das Prüfergebnis deckt sich mit dem Vergleichsbeispiel 2: nämlich deutlich niedrigere Trennfestigkeiten als in Beispiel 2 und deutlicher Abfall der Trennfestigkeiten nach chemischer Reinigung.

Trennfestigkeiten (N/5 cm) von Copolyamid-Textilverklebungen

| Beispiel Nr. | 1 | 2 | Vergleichs-beisp. 1 | Vergleichs-beisp. 2 | Vergleichs-beisp. 3 |
|---|---|---|---|---|---|
| Rezeptur LL | 40 | 25 | 40 | 30 | 25 |
| CL (Gew. —%) | 30 | 25 | 30 | 30 | 25 |
| DDS/MPD | 30 | | | | |
| AzS/MPD | | 25 | | | |
| DDS/HMD | | 25 | 30 | | 25 |
| SS/HMD | | | | 20 | |
| AzS/HMD | | | | 20 | |
| AzS/MNDA | | | | | 25 |
| $\eta$ rel | 1,47 | 1,38 | 1,5 | 1,38 | 1,43 |
| Extrakt ($CH_2Cl_2$) | 3,7 % | 3,1 % | 2,9 % | 3,6 % | 3,3 % |
| FP 51: Fließpunkt (°C) | 110° | 92° | 117° | 95° | 93° |
| AG (g/m²) | 21 | 19 | 21 | 16 | 17 |

| Temp. —Einstellung (°C) in d. Bügelpressenplatten | | 1 | | | 2 | | | Vergleichsbeisp. 1 | | | Vergleichsbeisp. 2 | | | Vergleichsbeisp. 3 | | |
|---|---|---|---|---|---|---|---|---|---|---|---|---|---|---|---|---|
| | | 140 | 150 | 160 | 140 | 150 | 160 | 140 | 150 | 160 | 140 | 150 | 160 | 140 | 150 | 160 |
| unbehandelt | N | 18,5 | 24,5 | 29,7 | 14,7 | 15,8 | 14,9 | 9,3 | 11,2 | 12,3 | 16,2 | 18,1 | 16,5 | 15,0 | 18,8 | 19,3 |
| | S | 12,0 | 13,0 | 23,0 | 8,7 | 10,5 | 9,8 | 5,8 | 6,4 | 6,0 | 7,5 | 6,3 | 5,5 | 8,8 | 9,3 | 9,0 |
| 1 × gewaschen 60°C | N | 15,7 | 15,5 | 25,0 | | | | 6,1 | 7,5 | 7,7 | | | | | | |
| | S | 12,3 | 11,3 | 22,7 | | | | 3,1 | 3,8 | 4,5 | | | | | | |
| 3 × gewaschen 60°C | N | 15,0 | 14,8 | 25,0 | | | | 5,5 | 6,6 | 8,3 | | | | | | |
| | S | 12,7 | 11,2 | 21,7 | | | | 2,8 | 4,3 | 4,2 | | | | | | |
| 3 × chemisch gereinigt | N | 17,0 | 17,3 | 27,3 | 14,5 | 19,5 | 14,8 | 6,0 | 7,8 | 7,7 | 13,3 | 14,0 | 18,5 | 10,2 · | 14,8 | 15,3 |
| | S | 14,0 | 12,5 | 24,2 | 8,2 | 11,0 | 9,5 | 3,7 | 3,8 | 5,0 | 4,7 | 6,8 | 7,8 | 5,8 | 6,2 | 6,8 |
| 5 × chemisch gereinigt | N | 18,3 | 18,2 | 26,2 | 13,3 | 14,8 | 12,8 | 6,5 | 7,3 | 8,3 | 11,8 | 12,8 | 14,3 | 11,3 | 14,5 | 15,0 |
| | S | 13,0 | 13,3 | 24,5 | 8,0 | 9,8 | 9,3 | 3,0 | 3,6 | 4,4 | 2,5 | 5,2 | 4,5 | 4,0 | 4,8 | 4,8 |

## Patentansprüche

1. Verwendung von Copolyamiden auf der Basis von Dicarbonsäuren, Diaminen und ω-Aminocarbonsäuren bzw. Lactamen als Schmelzkleber zum Heißsiegeln von Textilien,
dadurch gekennzeichnet,
daß man als Schmelzkleber Copolyamide verwendet aus
A 20 bis 80 Gewichtsprozent einer oder mehrerer aliphatischer ω-Aminocarbonsäuren bzw. Lactamen mit 6 bis 12 Kohlenstoffatomen in der Kette und
B 80 bis 20 Gewichtsprozent äquimolarer Gemische einer oder mehrerer aliphatischer Dicarbonsäuren mit 6 bis 12 Kohlenstoffatomen und aliphatischen α,ω-Diaminen und gegebenenfalls cycloaliphatischen Diaminen mit 6 bis 12 Kohlenstoffatomen, wobei mindestens 30 Gewichtsprozent dieser Diamine ausschließlich einfach verzweigte aliphatische Diamine mit 6 Kohlenstoffatomen darstellen und andere einfach verzweigte aliphatische Diamine mit 3 bis 15 Kohlenstoffatomen ausgeschlossen sind.

2. Verwendung von Copolyamiden nach Anspruch 1, dadurch gekennzeichnet,
daß man als einfach verzweigte aliphatische Diamine mit 6 Kohlenstoffatomen ein Isomerengemisch verwendet, das 80 bis 100 Gewichtsprozent 2-Methylpentamethylen-diamin und 0 bis 20 Gewichtsprozent 2-Ethyltetramethylendiamin enthält.

Verwendung von Copolyamiden nach den Ansprüchen 1 und 2, dadurch gekennzeichnet,
daß mindestens 50 Gewichtsprozent der Diamine der Komponente B ausschließlich einfach verzweigte aliphatische Diamine mit 6 Kohlenstoffatomen sind.

4. Verwendung von Copolyamiden nach den Ansprüchen 1 bis 3, dadurch gekennzeichnet,
daß in der Komponente A mindestens zwei verschiedene Aminocarbonsäuren bzw. Lactame enthalten sind.

## Claims

1. The use of a copolyamide based on a dicarboxylic acid, a diamine and an (ω)-aminocarboxylic acid and/or lactam as a hot-melt adhesive for heat-sealing textiles, characterised in that there is used as hot-melt adhesive a copolyamide from
A) 20 to 80% by weight of one or more aliphatic ωaminocarboxylic acids and/or lactams of 6 to 12 carbon atoms in the chain and
B) 80u to 20% by weight of an equimolar mixture of one or more aliphatic dicarboxylic acids of 6 to 12 carbon atoms and aliphatic α,ω-diamines and optionally cycloaliphatic diamines of 6 to 12 carbon atoms, at least 30% by weight of these diamines being exclusively singly branched aliphatic diamine(s) of 6 carbon atoms and other singly branched aliphatic diamines of 3 to 15 carbon atoms being excluded.

2. The use of a copolyamide as claimed in claim 1, characterised in that an isomer mixture containing 80 to 100% by weight of 2-methylpentamethylene diamine and 0 to 20% by weight of 2-ethyltetramethylene diamine is used as the singly branched aliphatic diamine component with 6 carbon atoms.

3. The use of a copolyamide as claimed in claim 1 or 2, characterised in that at least 50% by weight of the diamines of component B) are exclusively singly branched aliphatic diamine(s) of 6 carbon atoms.

4. The use of a copolyamide as claimed in any of claims 1 to 3, characterised in that at least two different aminocarboxylic acids and/or lactams are present in component A.

## Revendications

1. L'utilisation de copolyamides à base d'acides dicarboxyliques de diamines et d'acides oméga-amino-carboxyliques ou de lactames en tant qu'adhésifs fusibles pour le scellement à chaud de textiles, caractérisée par le fait qu'on utilise, comme adhésifs fusibles, des copolyamides obtenues à partir
A. de 20 à 80 % en poids d'un ou plusieurs acides oméga-amino-carboxyliques aliphatiques ou de lactames comportant de 6 à 12 atomes de carbone dans la chaîne, et
B. de 20 à 80 % en poids de mélanges équimoléculaires d'un ou plusieurs acides dicarboxyliques aliphatiques comportant de 6 à 12 atomes de carbone et d'alpha, oméga-diamines aliphatiques et, le cas échéant, de diamines cyclo-aliphatiques comportant de 6 à 12 atomes de carbone, 30 % en poids au moins de ces diamines représentant exclusivement des diamines aliphatiques à simple ramification et comportant 6 atomes de carbone et d'autres diamines aliphatiques à simple ramification comportant de 3 à 15 atomes de carbone étant exclues.

2. L'utilisation de copolyamides selon la revendication 1,
caractérisée par le fait qu'on utilise, comme diamines aliphatiques à simple ramification comportant 6 atomes de carbone, un mélange d'isomères renfermant de 80 à 100 % en poids de 2-méthyl-pentaméthylène-diamine et de zéro à 20 % en poids de 2-éthyl-tétraméthylène-diamine.

3. L'utilisation de copolyamides selon les revendications 1 et 2,
caractérisée par le fait qu'au moins 50 % en poids des diamines du composant B sont exclusivement des diamines aliphatiques à simple ramification et comportant 6 atomes de carbone.

4. L'utilisation de copolyamides selon les revendications 1 à 3,
caractérisée par le fait que le composant A renferme au moins deux acides aminocarboxyliques ou lactames différents.